# EUROPEAN PATENT SPECIFICATION

(11) **EP 2 278 198 B1**
(45) Date of publication and mention of the grant of the patent: **13.08.2014**
(21) Application number: 10180936.6
(22) Date of filing: 24.05.2006
(51) Int. Cl.: F16J 15/32, B29C 43/18, B29D 99/00, B29L 31/26, B29K 21/00, B29C 43/02

(54) **Seal and corresponding manufacturing method**
Dichtung und entsprechendes Herstellungsverfahren
Joint et procédé de fabrication correspondant

(30) Priority: 26.05.2005 IT MO20050130
(43) Date of publication of application: 26.01.2011
(62) Divisional of application: 06753848.8
(73) Proprietor: Tenute S.r.l., 20122 Milano (MI) (IT)
(72) Inventor: Ravanelli, Raffaello, 20040, Cambiago (MI) (IT); Bertini, Mario, 20060, Bellinzago Lombardo (MI) (IT)
(74) Representative: Crugnola, Pietro

(56) References cited:
- EP-A- 0 795 702
- CH-A5- 578 137
- FR-A- 1 508 575
- US-A- 3 495 843
- US-A- 4 406 847
- US-A- 4 464 322
- US-A- 4 957 680
- PATENT ABSTRACTS OF JAPAN vol. 010, no. 193 (M-496), 8 July 1986 (1986-07-08) & JP 61, 038267, A, (KIIPAA KK), 24 February 1986 (1986-02-24)

## Description

The present invention relates to a method for the manufacture of a seal, in particular a seal to be placed between mechanical elements or members that are movable in relation to one another for preventing the leakage of a fluid contained therein and, more in general, to prevent the passage between two contiguous zones of fluid and solid substances such as lubricating and/or refrigerating liquids, impurities, waste, residues and the like.

Seals are known consisting of an annular body made of flexible material and provided with one or more protrusions or end lips intended for abutting on a corresponding friction surface or abutting surface, fixed or movable, for realising the static or dynamic seal.

In radial seals the sealing lip abuts on the cylindrical surface of a rotating or axially sliding shaft. In the axial or face seal the sealing lip abuts on a flat, fixed or movable surface.

Such seals are generally made of rubber or of another elastomer the composition of which depends on the chemical characteristics of the fluids to be contained, on the mechanical characteristics of the members connected and on operating conditions (temperature, speed, etc).

The elastomeric seals disclosed above have the drawback of having sealing lips that are subject to significant wear, both because of the sliding friction with the abutting surface and because of the overheating that said friction may cause.

The presence of residues, waste, scales, solid fragments in the fluids with which the seal comes into contact, in addition to contributing to wear of the seal, may cause lacerations, cuts, breakage of the latter. This happens for laminating cylinders in which the seals are intended for separating the supporting bearings of the laminating cylinders from the outer environment and for preventing the exit of the lubricating oil and the entry of a cooling fluid that has been greatly contaminated by scales, fragments and metallic residues.

The high wear and possible damages affect the average durability of said seals, which often have to be replaced, with a consequent increase in maintenance costs.

In order to overcome this drawback, seals and corresponding manufacturing methods have been devised that require the use of coatings with self-lubricating materials or materials with a low friction coefficient, for example polytetrafluorethylene (PTFE), to be applied to the entire surface of the seal or only to the most stressed portions, typically the sealing lips.

These coatings form thin films that are applied to the seal with different techniques, for example, by painting at the end of the moulding process or by subsequent gluing and therefore said coatings have small thicknesses, which are generally variable from a few microns to a few tenths of a millimetre.

These coatings, although they have a low friction coefficient and a good wear resistance, due to their small thickness have relatively short operating life, especially in the case of heavy-duty environmental conditions and consequently they do not resolve the problem of the seal durability.

Furthermore, the aforementioned films do not constitute a sufficiently resistant protection barrier for preserving the seal surfaces from possible cuts and lacerations. In addition, these films are subject to partial and total detachments from the seal surface, owing to the process of adhesion or gluing that is not always optimal or reliable. Known injection moulding processes that are usually used for manufacturing seals allow the aforementioned coatings to be applied only at the end of the moulding and vulcanisation processes.

Actually, these moulding processes do not permit to manufacture seals that are provided with coating elements or inserts which are vulcanized integral with the seal.

In injection moulding, suitable drawing units or extruders inject the filler of elastomeric material in fluid state inside a cavity of the mould. This injection occurs at very high pressures that cause very rapid and dynamic movement of the fluid material inside the mould. Any coating elements or inserts that may have been inserted inside the mould to be vulcanised to the elastomeric material might not therefore remain in the correct position but would inevitably be moved, dragged by the motion of the fluid material.

Prior art seals provided with PTFE coating means are known from e.g. US 4,957,680 and FR 1 508 575.

An object of the invention is to improve known seals and the corresponding methods for the manufacture thereof, in particular to increase the reliability, resistance and operating durability of said known seals.

Another object is to obtain a method for the manufacture of a seal provided with sealing means, which are particularly resistant to wear and mechanical stress and therefore which are capable to ensure at the same time optimal static and dynamic seal and long durability, even in adverse operating conditions.

A further object is to obtain a seal manufactured by means of a relatively simple, economical and reliable method.

A seal is provided that is suitable for being interposed at least between a first element and a second element, comprising at least a body and sealing means provided with at least a contact portion suitable for abutting on a friction surface of said second element, characterised in that it comprises ribbon means having at least high wear resistant and a low friction coefficient, said ribbon means being fixed to said contact portion of said sealing means.

Owing to this aspect it is possible to manufacture a seal the sealing means of which, for example one or more lips or end protrusions, is very wear resistant, especially at the contact portion that abuts on the friction surface of a moving mechanical element or member, since said sealing means are provided with coatings consisting of ribbon means. In particular, because of technical features of the material of which the ribbon means are made of, the seal is able to ensure an optimal static and/or dynamic seal and at the same time a long durability even in extremely heavy-duty operating conditions.

A first aspect of the invention provides the use of polytetrafluorethylene ribbon means for coating at least a contact portion of sealing means of a seal, said seal being suitable for being interposed between a first element and a second element, said contact portion being intended abut for abutting on at least a friction surface of said second element, whereby the polytetrafluorethylene (PTFE) ribbon means comprises adhesion promoting means distributed at least on a face of said ribbon means for facilitating the vulcanisation and the fixing thereof to sealing means of a body of a seal, the ribbon means being shaped for adhering to an annular shaped body and whereby the edges of the ribbon means are joined to form a closed ring.

The use of said ribbon means allows a seal that is particularly reliable, resistant and has a long working durability to be manufactured in a simple and economical way. A second aspect of the invention provides a method for manufacturing a seal, comprising at least a body and sealing means, by using heated mould means that is provided with at least a cavity, comprising introducing filler means inside said cavity, closing said mould means so as to compress said filler means for a time necessary for the melting of said filler means and subsequent vulcanisation thereof for forming at least said body and said sealing means, said introducing inside said cavity comprises positioning ribbon means at least onto a surface of said cavity intended for forming a contact portion of said sealing means, whereby before said positioning ribbon means, joining the edges of the latter to form a closed ring is provided.

Owing to this aspect of the invention it is possible to obtain a relatively simple, economical and reliable method for manufacturing a seal provided with ribbon means, which have high wear resistance and a low friction coefficient, and which are integrally fixed to defined contact portions of the seal, typically portions of the sealing means of the seal intended for abutting on friction surfaces of moving mechanical elements or members. Owing to this method it is possible to keep the ribbon means in the desired position inside the mould during the entire moulding and vulcanisation process and obtain a seal that is particularly resistant to wear and mechanical stress and has long durability.

The invention can be better understood and implemented with reference to the enclosed drawings, that show an exemplifying and non-limitative embodiment thereof, in which:
Figure 1 is a partial section view of a seal according to the invention interposed between two elements for carrying out a seal of radial type;
Figure 2 is a partial section view of a version of the seal in Figure 1 interposed between two elements for carrying out a seal of face type;
Figures 3 to 7 illustrate partial section views of versions of the seal in Figure 1;
Figure 8 illustrates a partial section view of mould means containing filler means, ribbon means and supporting means in rubberised fabric for manufacturing a seal according to the invention;
Figure 9 illustrates a partial section view of the mould means of Figure 8 containing filler means, ribbon means and steel supporting means for manufacturing a version of the seal according to the invention.

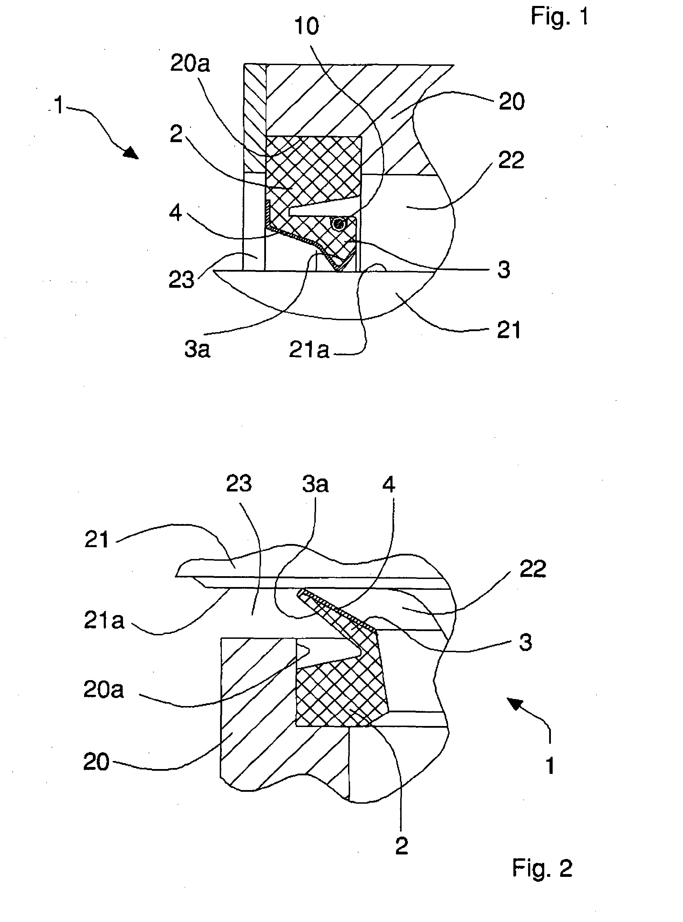

With reference to Figure 1, numeral 1 indicates a seal that is suitable for being interposed at least between a first element 20 and a second element 21 and substantially comprising a body 2 and sealing means 3. The latter has at least a contact portion 3a intended for abutting on a friction surface 21a of the second element 21 to ensure the seal between an external zone 23 and an internal zone 22 that are contiguous, i.e. to prevent the passage of fluid and solid substances such as lubricating and/or refrigerating liquids, waste, residues and the like.

The seal 1 comprises ribbon means 4 having high wear resistance and a low friction coefficient, fixed to the sealing means 3 so as to coat at least the contact portion 3a of the latter.

In the embodiment shown in Figure 1, the body 2 of the seal 1 has an annular shape and the sealing means 3 comprises a sealing lip of circular shape, the contact portion 3a of which is coated by the ribbon means 4 and abuts on the friction surface 21a.

In particular, the body 2 is inserted into a cylindrical seat 20a of a support or bearing 20 and the sealing lip 3 abuts radially on the cylindrical surface 21a of a shaft or pin 21, for example rotating, so as to realise a seal of radial type. Alternatively, the seal 1 can be fixed to the fixed or rotating shaft, and in this case the body 2 will be inserted into a suitable seat of said shaft and the sealing lip 3 will abut radially on the cylindrical surface of a support or bearing.

The seal may comprise elastic means, consisting, for example, of a spiral spring 10 inserted into a suitable seat of the sealing lip 3 to keep the latter abutting on the friction surface 21a of the shaft 21 during use.

The body 2 and the sealing means 3 are made of elastomer, for example a thermosetting polymer which is suitably crosslinked or vulcanised.

The ribbon means 4 has a flat and elongated shape with a thickness comprised between 0.3 and 1 mm, preferably 0.5 mm, and width variable according to specific requirements.

The ribbon means 4 is for example made of a fluorinated polymer, in particular virgin or filled polytetrafluorethylene (PTFE), i.e. containing filler elements of various nature such as glass fibre, carbon, graphite, stainless steel, bronze, nickel, ceramics, etc.

The type and the quantity of filler elements to be added depends on the mechanical and chemical properties that are desired in the PTFE and on the features of the materials with which said PTFE will come into contact during use.

The various filler elements added to the composition of the PTFE enable some features thereof to be improved, for example they can increase the wear resistance, the thermal conductivity, the creep strength and reduce the friction coefficient.

The ribbon means 4 is integral with the sealing means 3 as it is fixed by curing the latter during the vulcanising process of the seal 1.

The ribbon means 4 is substantially obtained from a flat semifinished product or ribbon in virgin or filled PTFE, that is of known type and commercially available for example a ribbon of filled and hardened PTFE of the type generally used for coating the sliding bars of the machine tools. The ribbon means 4 can be cut according to the type and the dimensions of the seal to be obtained therefrom, for example, from a roll or reel of ribbon of appropriate width.

In the case of annular seals, the cut ribbon means 4 is subsequently joined, for example during vulcanisation, to form a closed ring. Before being joined, the ribbon means can be shaped, for example by calendaring, to assume a conical surface that is complementary to that of the contact portion 3a of the sealing lip 3. Alternatively, but not within the scope of the invention, the ribbon means 4 may consist of a washer or entire flat ring of appropriate dimensions, which can be suitably calendared.

In order to ensure optimal adhesion of the ribbon means 4 to the sealing means 3 during the moulding process and the vulcanisation process of the seal 1, applying adhesion promoting means to at least a surface 4b of said ribbon means 4 is provided, which surface 4b is intended for adhering to the contact portion 3a of the sealing lip 3. The adhesion promoting means consists substantially of an adhesion promoting agent, for example a primer paint, of the type commonly used for fixing and adhering of metal materials with smooth and compact surfaces to an elastomeric material during vulcanisation of the latter. The primer paint is thus applied to the ribbon means 4 before the ribbon means 4 is positioned in the cavity of the mould for subsequent moulding and vulcanisation.

Figure 2 illustrates a version of the seal 1, in which the annular-shaped body 2 is fixed to a seat 20a of a bearing 20 and the sealing lip 3, provided with ribbon means 4, abuts on a flat surface 21a of a shaft 21, to realise a seal of the face type. Alternatively, the seal 1 may be fixed to the shaft, the body 2 being inserted into a suitable seat of said shaft and the sealing lip 3 abutting on a flat surface of the support.

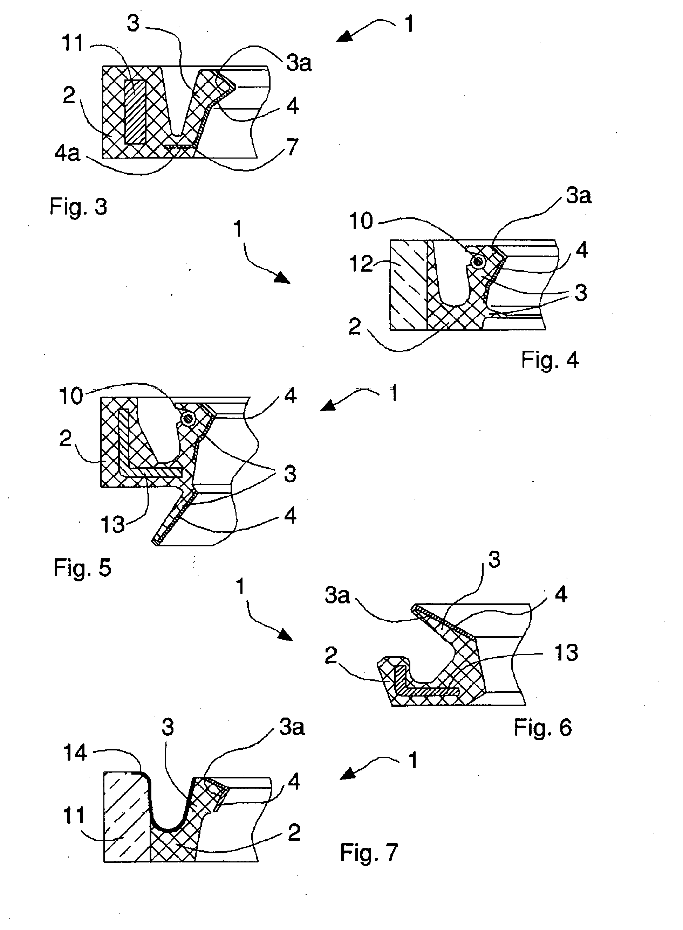

The further version illustrated in Figure 3 differs from the embodiment in Figure 1 as the ribbon means 4 has an end portion 4a intended for being inserted inside the body 2. This solution avoids and noticeably reduces any formation of slits or cracks on the surface of the seal 1 at a superficial joint zone 7 between the ribbon means 4 and the sealing lip 3, particularly if said sealing lip 3 is very flexible and repeatedly bending stressed during use of the seal.

This version of the seal 1 furthermore comprises first supporting means 11 incorporated into the body 2 intended for reinforcing and keeping the latter abutting on the seat 20a of the bearing 20. This supporting means 11 consists, for example, of elements of raw steel or of composite material, such as glass fibre (VTR), cotton added with resin, etc.

Figure 4 illustrates another version of the seal 1 for a radial seal in which second supporting means 12 is provided fixed to the body 2 and consisting of a rubberised fabric ring or other similar material for forming a supporting shoulder or back for the seal. The sealing means 3 comprises two distinct sealing lips, the first of which is intended for ensuring the seal and is provided with ribbon means 4, the second acting as a scraping element and devoid of ribbon means 4.

Figure 5 illustrates a version of the seal for radial and face seal, which differs from the seal in Figure 4 by the fact that the sealing lips of the sealing means 3 both have ribbon means 4 fixed to the contact portions. Third supporting means 13 incorporated into the body 2 consists of a metal ring, for example of carbon steel having an L-shaped cross section suitable for stiffening the body 2 and in the meantime strengthening the connecting portion thereof with the sealing means 3.

Figure 6 illustrates a further version of the seal 1 for face seal that differs from the seal in Figure 2 through the fact of being provided with supporting means 13 incorporated into the body 2 and consisting of a metal ring with an L-shaped cross section.

In Figure 7 is illustrated another version of the seal 1 for a radial seal, comprising second supporting means 12, consisting of a rubberised fabric ring, to which elastic means 14 is fixed consisting of a finger spring, to which the body 2 and the sealing means 3 of the seal are vulcanised. The sealing means 3 comprises a lip provided with ribbon means 4 that during operation is kept abutting on the friction surface 21a by the comb spring 14.

It is clear that the object of the present invention can be extended to numerous seals of known type, for example lip seals for rotary or linear movements, oil-seals and stem scraper rings, static seals, the invention itself being limited to the scope of the appended claims.

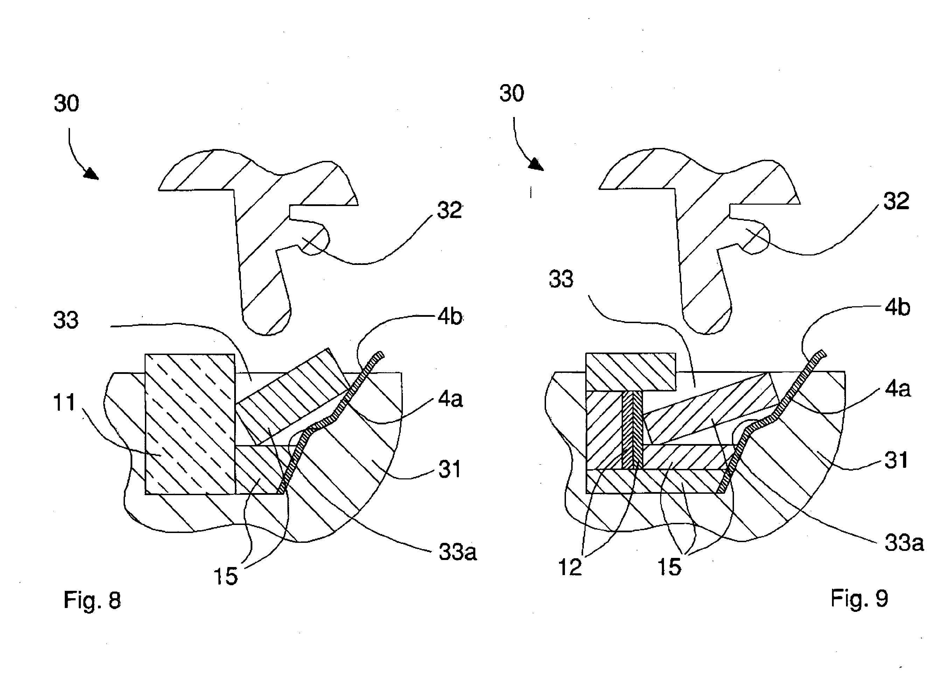

Figure 8 illustrates a step of the method for manufacturing a seal 1 according to the invention, through compression moulding i.e. by using heated mould means 30, provided with a cavity 33 suitable for housing filler means 15 consisting of a plurality of elements, for example of elastomeric material, suitable for being melted, compressed and vulcanised to form the body 2 and the sealing means 3 of said seal 1.

In particular, the mould means 30 comprises a first shell 31 provided with the cavity 33, said female, and a second shell 32, said male, provided with a shaped portion.

The method provides for introducing into the cavity 33 the filler elements 15 and closing the mould means 30 so as to compress said elements 15 for a time necessary for the melting thereof and subsequent vulcanisation. Before introducing the filler elements 15 positioning ribbon means 4 on a surface 33a of said cavity 33 is provided, said surface 33a being intended for forming a contact portion 3a of the sealing means 3 of the seal 1. More precisely, said ribbon means 4 lays and to adhere to the surface 33a.

Before positioning the ribbon means 4 in the cavity 33, applying suitable adhesion promoting means to a face 4b of said ribbon means 4 intended for contacting the filler means 15 is provided. The adhesion promoting means enables the filler means 15 to adhere firmly to the ribbon means 4 during vulcanisation.

The filler elements 15 are inserted and positioned in the cavity 33 so as to correctly fill, once melted, the exact volume of the cavity 33 and so that the filler elements 15 fit into one another or at least position to one another reciprocally in a definitive way, above all for locking or keeping in position the ribbon means 4. For this purpose the filler elements 15 are suitably dimensioned and shaped in function of the cavity 33 into which they are inserted. Typically, the filler elements 15 have the shape of thin strips with a rectangular section arranged in layers.

The ribbon means 4 is obtained from a strip of semimanufactured PTFE that is suitably cut and possibly shaped to adhere to the surface 33a, and to be complementary thereto.

In the case of a seal 1 of annular shape, joining the edges of the ribbon means 4 is provided to obtain a closed ring. Alternatively, but not within the scope of the invention, the ribbon means 4 may comprise a washer or entire flat ring of appropriate dimensions.

Introducing into the cavity 33 the supporting means 11, 12, 13 and the elastic means 14 suitable for being incorporated or fixed to the body 2 of the seal is furthermore provided. The supporting means consists, for example, of one or more rubberised fabric rings 12 or of metal rings 11, 13 and is intended for stiffening the body 2 of the seal and for keeping the latter abutting on a seat 20a of the first element 20.

The elastic means 14 may comprise a finger spring inserted into the mould suitable for keeping the sealing means 3 abutting on a friction surface 21a of a second element 21. The compression-moulding of the seal can be achieved in two or more steps, above all in the case of ribbons of significant dimensions.

By example, an initial first premoulding step can be provided for melting, joining and compressing the filler elements 15 that are into a cavity portion 33 adjacent to the ribbon means 4 and in such a way enabling the filler melted elastomeric material thus obtained to adhere to said ribbon means 4.

In a subsequent step, remaining filler elements 15 can be introduced, said filler elements 15 melting to completely fill the cavity 33 and, for example, incorporating or adhering to the supporting means 11, 12, 13 and/or to the elastic means 14 that may be present. In this subsequent step, in addition to the complete melting and joining of the filler elements 15, the polymerisation or cross linkage process thereof is completed.

## Claims

1. **Use of polytetrafluorethylene coating means (4) for coating at least a contact portion (3a) of sealing means (3) of a seal (1), said seal (1) being suitable for being interposed between a first element (20) and a second element (21), said contact portion (3a) being intended for abutting on at least a friction surface (21a) of said second element (21), said**
Polytetrafluorethylene coating means **comprising** adhesion promoting means distributed at least on a face (4b) of said coating means (4) for facilitating the vulcanisation and the fixing thereof to sealing means (3) of a body (2) of a seal (1), **the coating means being shaped for adhering to an annular shaped body (2), characterised in that** said coating means consist of ribbon means (4) whereby **the edges of the ribbon means (4) are joined to form** a **closed ring.**

2. Use according to claim 1, **characterised in that** the ribbon means is cut to size from a roll.

3. Method for manufacturing a seal (1), comprising at least a body (2) and sealing means (3), by using heated mould means (30) that is provided with at least a cavity (33), comprising introducing filler means (15) inside said cavity (33), closing said mould means (30) so as to compress said filler means (15) for a time necessary for the melting of said filler means (15) and subsequent vulcanisation thereof for forming at least said body (2) and said sealing means (3), **wherein** said introducing into said cavity (33) comprises positioning coating means (4) at least onto a surface (33a) of said cavity (33) intended for forming a contact portion (3a) of said sealing means (3), **characterized in that,** said coating means consist of ribbon means (4) and **in that before said positioning ribbon means (4), joining the edges of the latter to form a closed ring is provided.**

4. Method according to claim 3, wherein before said positioning ribbon means (4) applying adhesive promoting means at least to a face (4b) of said ribbon means (4) intended for contacting said filler means (15) is provided.

5. Method according to claim 3, wherein said positioning ribbon means (4) comprises laying the latter on said surface (33a).

6. Method according to claim 3, wherein before said positioning ribbon means (4), cutting the latter according to a preset length is provided.

7. Method according to claim 3, or 6, wherein before said positioning ribbon means (4), shaping the latter for giving the ribbon means (4) a shape that is complementary to said surface (33a) is provided.

8. Method according to any one of claims 3 to 7, wherein said introducing said filler means (15) comprises inserting and mutually positioning a plurality of filler elements in said cavity (33).

9. Method according to claim 8, wherein before said introducing said plurality of filler elements (15) defining the dimensions and shape of each filler element is provided.

10. Method according to any one of claims **3 to 9,** wherein said introducing comprises further introducing supporting means (11; 12; 13), and/or wherein said introducing comprises further introducing second elastic means (14).

11. Method according to any one of claims **3 to 10,** wherein said compressing is realised in at least two steps, and/or wherein said introducing said filler means (15) into said cavity (33) is realised in at least two steps.

## Patentansprüche

1. Verwendung einer Polytetrafluorethylen-Beschichtungseinrichtung (4) zum Beschichten mindestens eines Kontaktteils (3a) einer Dichtungseinrichtung (3) einer Dichtung (1), wobei die Dichtung (1) zum Einfügen zwischen ein erstes Element (20) und ein zweites Element (21) geeignet ist, wobei der Kontaktteil (3a) zum Anliegen an mindestens einer Reibungsoberfläche (21 a) des zweiten Elements (21) bestimmt ist, wobei die Polytetrafluorethylen-Beschichtungseinrichtung ein Haftförderungsmittel umfasst, das zumindest auf einer Fläche (4b) der Beschichtungseinrichtung (4) verteilt ist, um die Vulkanisation und die Befestigung davon an der Dichtungseinrichtung (3) eines Körpers (2) einer Dichtung (1) zu erleichtern, wobei die Beschichtungseinrichtung zum Haften an einem ringförmigen Körper (2) geformt ist, **dadurch gekennzeichnet, dass** die Beschichtungseinrichtung aus einer Bandeinrichtung (4) besteht, wobei die Kanten der Bandeinrichtung (4) zur Bildung eines geschlossenen Rings verbunden sind.

2. Verwendung nach Anspruch 1, **dadurch gekennzeichnet, dass** die Bandeinrichtung von einer Rolle auf Größe geschnitten wird.

3. Verfahren zur Herstellung einer Dichtung (1), die mindestens einen Körper (2) und eine Dichtungseinrichtung (3) umfasst, unter Verwendung einer erhitzten Formeinrichtung (30), die mit mindestens einem Hohlraum (33) versehen ist, welches das Einführen einer Fülleinrichtung (15) in den Hohlraum (33), das Schließen der Formeinrichtung (30), um die Fülleinrichtung (15) zu komprimieren, für eine Zeit, die für das Schmelzen der Fülleinrichtung (15) erforderlich ist, und deren anschließende Vulkanisation zum Ausbilden zumindest des Körpers (2) und der Dichtungseinrichtung (3) umfasst, wobei das Einführen in den Hohlraum (33) das Positionieren der Beschichtungseinrichtung (4) zumindest auf einer Oberfläche (33a) des Hohlraums (33), die zum Ausbilden eines Kontaktteils (3a) der Dichtungseinrichtung (3) bestimmt ist, umfasst, **dadurch gekennzeichnet, dass** die Beschichtungseinrichtung aus einer Bandeinrichtung (4) besteht und dass vor dem Positionieren der Bandeinrichtung (4) das Verbinden der Kanten der letzteren, um einen geschlossenen Ring auszubilden, vorgesehen wird.

4. Verfahren nach Anspruch 3, wobei vor dem Positionieren der Bandeinrichtung (4) das Aufbringen eines Haftförderungsmittels zumindest auf eine Fläche (4b) der Bandeinrichtung (4), die zum Kontakt mit der Fülleinrichtung (15) bestimmt ist, vorgesehen wird.

5. Verfahren nach Anspruch 3, wobei das Positionieren der Bandeinrichtung (4) das Legen der letzteren auf die Oberfläche (33a) umfasst.

6. Verfahren nach Anspruch 3, wobei vor dem Positionieren der Bandeinrichtung (4) das Schneiden der letzteren gemäß einer vorgegebenen Länge vorgesehen wird.

7. Verfahren nach Anspruch 3 oder 6, wobei vor dem Positionieren der Bandeinrichtung (4) das Formen der letzteren, um der Bandeinrichtung (4) eine Gestalt zu geben, die zur Oberfläche (33a) komplementär ist, vorgesehen wird.

8. Verfahren nach einem der Ansprüche 3 bis 7, wobei das Einführen der Fülleinrichtung (15) das Einsetzen und gegenseitige Positionieren einer Vielzahl von Füllelementen in dem Hohlraum (33) umfasst.

9. Verfahren nach Anspruch 8, wobei vor dem Einführen der Vielzahl von Füllelementen (15) das Definieren der Abmessungen und der Gestalt jedes Füllelements vorgesehen wird.

10. Verfahren nach einem der Ansprüche 3 bis 9, wobei das Einführen ferner das Einführen einer Stützeinrichtung (11; 12; 13) umfasst und/oder wobei das Einführen ferner das Einführen einer zweiten elastischen Einrichtung (14) umfasst.

11. Verfahren nach einem der Ansprüche 3 bis 10, wobei das Komprimieren in mindestens zwei Schritten ausgeführt wird und/oder wobei das Einführen der Fülleinrichtung (15) in den Hohlraum (33) in mindestens zwei Schritten ausgeführt wird.

## Revendications

1. Utilisation de moyens d'enduction de polytétrafluoroéthylène (4) pour revêtir au moins une partie de contact (3a) de moyens d'étanchéité (3) d'un joint (1), ledit joint (1) étant adapté pour être interposé entre un premier élément (20) et un second élément (21), ladite partie de contact (3a) étant prévue pour venir en butée contre au moins une surface de frottement (21a) dudit second élément (21), lesdits moyens d'enduction de polytétrafluoroéthylène comprenant des moyens favorisant l'adhérence répartis au moins sur une face (4b) desdits moyens d'enduction (4) pour faciliter la vulcanisation et la fixation de ceux-ci sur des moyens d'étanchéité (3) d'un corps (2) d'un joint (1), les moyens d'enduction étant formés pour adhérer à un corps de forme annulaire (2), **caractérisée en ce que** lesdits moyens d'enduction sont constitués de moyens de ruban (4), ce par quoi les bords des moyens de ruban (4) sont assemblés pour former un anneau fermé.

2. Utilisation selon la revendication 1, **caractérisée en ce que** les moyens de ruban sont découpés à dimension à partir d'un rouleau.

3. Procédé pour fabriquer un joint (1), comprenant au moins un corps (2) et des moyens d'étanchéité (3), en utilisant des moyens de moule chauffés (30) qui sont pourvus d'au moins une cavité (33), comprenant l'introduction de moyens de charge (15) à l'intérieur de ladite cavité (33), la fermeture desdits moyens de moule (30) de manière à comprimer lesdits moyens de charge (15) pendant un temps nécessaire pour la fonte desdits moyens de charge (15) et une vulcanisation ultérieure de ceux-ci pour former au moins ledit corps (2) et lesdits moyens d'étanchéité (3), dans lequel ladite introduction dans ladite cavité (33) comprend le positionnement de moyens d'enduction (4) au moins sur une surface (33a) de ladite cavité (33) prévue pour former une partie de contact (3a) desdits moyens d'étanchéité (3), **caractérisé en ce que** lesdits moyens d'enduction sont constitués de moyens de ruban (4) et **en ce qu'**avant ledit positionnement des moyens de ruban (4), un assemblage des bords de ces derniers pour former un anneau fermé est prévu.

4. Procédé selon la revendication 3, dans lequel avant ledit positionnement des moyens de ruban (4), une application de moyens favorisant l'adhérence au moins sur une face (4b) desdits moyens de ruban (4) prévus pour entrer en contact avec lesdits moyens de charge (15) est prévue.

5. Procédé selon la revendication 3, dans lequel ledit positionnement des moyens de ruban (4) comprend la pose de ces derniers sur ladite surface (33a).

6. Procédé selon la revendication 3, dans lequel avant ledit positionnement desdits moyens de ruban (4), une découpe de ces derniers suivant une longueur prédéterminée est prévue.

7. Procédé selon la revendication 3 ou 6, dans lequel avant ledit positionnement des moyens de ruban (4), une mise en forme de ces derniers pour donner aux moyens de ruban (4) une forme qui est complémentaire à ladite surface (33a), est prévue.

8. Procédé selon l'une quelconque des revendications 3 à 7, dans lequel ladite introduction desdits moyens de charge (15) comprend l'insertion et le positionnement mutuel d'une pluralité d'éléments de charge dans ladite cavité (33).

9. Procédé selon la revendication 8, dans lequel avant ladite introduction de ladite pluralité d'éléments de charge (15), une définition des dimensions et de la forme de chaque élément de charge est prévue.

10. Procédé selon l'une quelconque des revendications 3 à 9, dans lequel ladite introduction comprend en outre l'introduction de moyens de support (11 ; 12 ; 13), et/ou dans lequel ladite introduction comprend en outre l'introduction de seconds moyens élastiques (14).

11. Procédé selon l'une quelconque des revendications 3 à 10, dans lequel ladite compression est réalisée en au moins deux étapes, et/ou dans lequel ladite introduction desdits moyens de charge (15) dans ladite cavité (33) est réalisée en au moins deux étapes.
